# EUROPÄISCHE PATENTSCHRIFT

(11) **EP 0 503 142 B1**
(45) Veröffentlichungstag und Bekanntmachung des Hinweises auf die Patenterteilung: **07.06.1995**
(21) Anmeldenummer: 91120264.6
(22) Anmeldetag: 27.11.1991
(51) Int. Cl.: B29C 70/00, F17C 1/16

(54) **Verfahren und Vorrichtung zum Herstellen von Druckbehältern sowie Druckbehälter**
Method and apparatus for manufacture of pressure vessels as well as pressure vessel
Procédé et dispositif pour fabriquer des récipients sous pression ainsi que récipient sous pression

(30) Priorität: 12.03.1991 DE 4107882
(43) Veröffentlichungstag der Anmeldung: 16.09.1992
(73) Patentinhaber: Ehs, Eugen, D-80798 München (DE)
(72) Erfinder: Ehs, Eugen, D-80798 München (DE)
(74) Vertreter: Grünecker, Kinkeldey, Stockmair & Schwanhäusser Anwaltssozietät

(56) Entgegenhaltungen:
- EP-A- 0 167 334
- AU-B- 594 085
- FR-A- 1 170 414
- FR-A- 2 582 254

## Beschreibung

Die Erfindung betrifft ein Verfahren der im Oberbegriff des Patentanspruchs 1 angegebenen Art sowie einen Druckbehälter gemäß Anspruch 4 und eine Vorrichtung zum Herstellen solcher Druckbehälter gemäß Anspruch 6.

Bei einem aus AU-B-594 085 bekannten Verfahren wird ein Schlauch aus Verstärkungsmaterial über den Innenbehälter gezogen und am offenen öde durch Zugfäden geschlossen. Der imprägnierte Schlauch wird dann ausgehärtet. Der Innenbehälter besteht aus flexiblem Material und wird später unter Innendruck expandiert und in den ausgehärteten Schlauch eingepaßt, der ihm die erforderliche Druckfestigkeit verleiht.

Bei einem aus EP-A2-0 167 334 bekannten Verfahren wird auf einen druckfesten vorgefertigten Druckbehälter eine schlauchförmige gestrickte oder gewirkte Hülle aufgezogen, die so elastisch ist, daß sie sich strecken und an die ganze Außenoberfläche des Druckbehälters anlegen läßt. Die offenen Enden der Hülle werden nach dem Aufziehen verdreht und zurückgefaltet, ehe die imprägnierte Hülle aushärtet. Die ausgehärtete Hülle hat die Aufgabe, bei Auftreffen eines Geschoßes auf den unter Druck stehenden Druckbehälter das Wegschleudern von Bruchstücken zu verhindern und eine gefährliche Druckwelle aufzuzehren.

Aus FR-A-25 82 554 ist ein Verfahren zum Herstellen einer hohlen Antriebs- oder Gelenkwelle aus einem geflochtenen und imprägnierten Kunststoffschlauch bekannt. Der Schlauch wird an den später die Antriebsgelenke aufnehmenden, großdurchmeßrigen Ende nach außen gedehnt. Diese Dehnung wird während der Aushärtung aufrechterhalten.

Andere Verfahren zum Herstellen verstärkter Druckbehälter sind aus DE-C-36 31 975, GB-A-93 53 32, FR-A-25 82 570, GB-B-11 32 081, DE-C-35 23 570 bekannt.

Der Erfindung liegt die Aufgabe zugrunde, ein Verfahren der eingangs genannten Art, einen nach dem Verfahren hergestellten Druckbehälter und eine Vorrichtung zum Herstellen solcher Druckbehälter anzugeben, die sich durch eine einfache und kostengünstige Beschichtung auszeichnen.

Die gestellte Aufgabe wird erfindungsgemäß mit dem Verfahren gemäß Anspruch 1, dem Druckbehälter gemäß Anspruch 4 und der Vorrichtung gemäß Anspruch 6 gelöst.

Die Beschichtung wird in einem Zug durch Überziehen, Spannen und Kontrahieren des imprägnierten Schlauches erstellt. Da solche Schläuche aus verschiedenen Materialien, in verschiedenen Größen und mit verschiedenen Eigenschaften handelsüblich sind, und das Überziehen ein einfacher Schritt ist, reduziert sich der Arbeits- und Kostenaufwand für die Beschichtung auf ein Minimum. Die Beschichtung hat mindestens die gleichen druckverteilenden und druckfestigkeitserhöhenden Eigenschaften wie eine herkömmliche Wickelbeschichtung. Gerade bei der Massenproduktion solcher Druckbehälter, z.B. Trocknerbehältergehäusen für Fahrzeug-Klimaanlagen, wird der für die Beschichtung erforderliche Kostenanteil so weit reduziert, daß er die Gesamtkosten des Druckbehälters nicht mehr dominiert.

Am Druckbehälter gemäß Anspruch 4 bildet die Beschichtung die gewünschte Armierung zur Erhöhung der Druckfestigkeit und zur Druckverteilung. Da die Festigkeitsund Druckverteilungseigenschaft bekannt und das Verstärkungsmaterial im Schlauch relativ gleichförmig orientiert ist, wird mit einer relativ dünnen Beschichtung eine wirksame Festigkeitserhöhung bzw. Druckverteilung erreicht. Das Gesamtgewicht des Druckbehälters kann gegebenenfalls geringer sein als mit einer herkömmlichen Wickelbeschichtung.

Die Vorrichtung gemäß Anspruch 6 zum Herstellen solcher Druckbehälter ist baulich einfach und ermöglicht einen hohen Ausstoß an Druckbehältern, weil für das Überziehen des Schlauches, das Spannen und Kontrahieren nur eine kurze Zeitspanne gebraucht wird.

Da die Fadenwinkel in der Beschichtung für die Druckfestigkeit bzw. Druckverteilung wichtig sind, werden sie gemäß Anspruch 2 durch das Spannen und Kontrahieren des Schlauches in situ eingestellt.

Bei dem Verfahren gemäß Anspruch 3 werden zugleich mehrere Druckbehälter einfach und rasch mit der Beschichtung versehen, was bei einer Großserienproduktion eine weitere Reduktion des Kostenanteils der Beschichtung ermöglicht.

Besonders wichtig ist die Ausführungsform des Druckbehälters gemäß Anspruch 5, weil bei der Serienproduktion von Druckbehältern, wie Trocknerbehältergehäuse für Fahrzeugklimaanlagen, die Herstellungskosten wünschenswert niedrig bleiben, wenn ein preiswerter Standardrohling oder ein handelsüblicher Schlauch kombiniert werden. Da Spraydosen oder Getränkebehälter zu Millionen hergestellt werden, sind Standardrohlinge außerordentlich kostengünstig erhältlich. Der Standardrohling hat nur die Form zu geben bzw. als Stützkörper für die später die Druckverteilung und Festigkeitserhöhung über-nehmende Beschichtung zu dienen. Aus der Kombination resultieren einfache, kostengünstige und besonders leichtgewichtige Druckbehälter für relativ hohe Innendrücke. Beispielsweise lassen sich so Trocknerbehältergehäuse für Fahrzeugklimaanlagen schaffen, die gegenüber herkömmlichen, z.B. aus Metall, nur mehr einen kleinen Bruchteil des Gewichts bei gleicher Druckfestigkeit haben und wesentlich kostengünstiger sind als diese.

Die Ausführungsform der Vorrichtung gemäß Anspruch 6 ist zweckmäßig, weil die Heizschalen die zusätzliche Funktion eines Spann- bzw. Kontrahierwiderlagers beim Spannen und Kontrahieren des Schlauches erbringen.

Schließlich ist die Ausführungsform von Anspruch 7 zweckmäßig, weil gleichzeitig eine größere Anzahl der Druckbehälter mit geringem herstellungstechnischen Aufwand hergestellt werden.

Anhand der Zeichnung werden Ausführungsformen des Erfindungsgegenstandes erläutert. Es zeigen:
- Fig. 1: einen Längsschnitt durch einen Druckbehälter,
- Fig. 2: einen Verfahrensschritt bei der Herstellung des Druckbehälters von Fig. 1,
- Fig. 3: einen weiteren Verfahrensschritt,
- Fig. 4: einen weiteren, und abschließenden Verfahrensschritt,
- Fig. 5: einen Schritt bei einem abgewandelten Verfahren,
- Fig. 6: ein Detail,
- Fig. 7: schematisch eine weitere Variante des Verfahrens zur gleichzeitigen Herstellung mehrere Druckbehälter,
- Fig. 8: einen Längsschnitt durch einen Teil einer Vorrichtung zum Herstellen von Druckbehältern, und
- Fig. 9: einen Querschnitt zu Fig. 8.

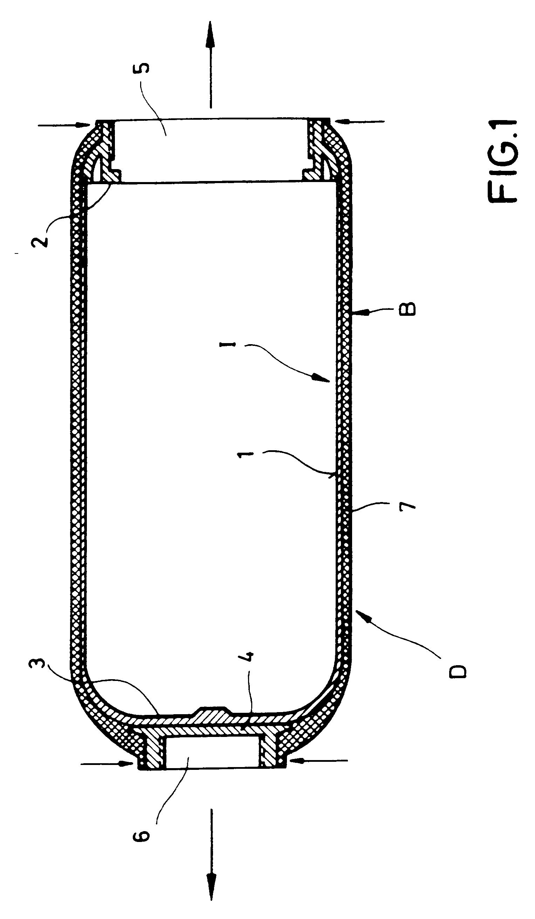

Ein Druckbehälter D gemäß Fig. 1, z.B. ein Trocknerbehälter für eine Fahrzeugklimaanlage, weist einen hohlen Innenbehälter I mit einer außenseitig stoffschlüssig aufgebrachten Beschichtung B auf. Der Innenbehälter I ist beispielsweise aus einem Standardrohling 1, aus Leichtmetall oder Kunststoff, von der Massenproduktion von Spraydosen oder Getränkebehältern gebildet. An einem Ende ist ein domförmiges Aufsatzteil 2 mit einer Öffnung 5 angesetzt. Der mit 3 bezeichnete Boden trägt außenseitig einen Stützkörper 4 mit einer Befestigungsöffnung 6. In der Beschichtung B sind die Öffnungen 6 und 5 ausgespart. Die Öffnung 6 könnte auch verschlossen sein. Die Beschichtung B besteht aus Verstärkungsmaterial 7, z.B. auf der Basis von Glasfasern oder -filamenten, das mit einem Kunstharz imprägniert und ausgehärtet ist.

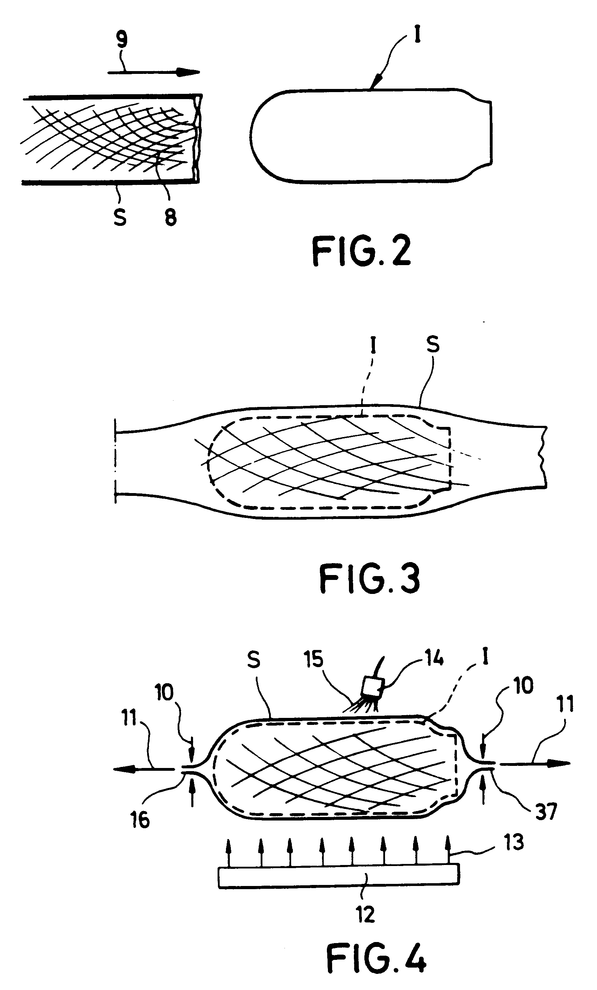

Gemäß Fig. 2 bis 4 wird die Beschichtung B mit einem Schlauch oder Schlauchabschnitt S, vorzugsweise einem aus dem Verstärkungsmaterial gewirkten oder gestrickten Schlauch gebildet. Der elastische Schlauch S, in dem die Fasern oder Filamente, auch in Form von Fäden oder Bändern oder Streifen, miteinander verflochten oder verstrickt sind, wird in Richtung eines Pfeiles 9 über den Innenbehälter I gezogen, wobei der Innendurchmesser des Schlauches S kleiner sein kann als der Außendurchmesser des Innenbehälters I.

Gemäß Fig. 3 erstreckt sich der Schlauch S über beide Behälterenden hinaus. Gemäß Fig. 4 werden dann beide Schlauchenden 16 und 17 - wie durch Pfeile 10 angedeutet - kontrahiert und der Schlauch in Richtung der Pfeile 11 unter Spannung gesetzt, damit er sich vollflächig an den Innenbehälter I und an die Behälterenden anlegt. Wie bei 14 symbolisch angedeutet, wird ein Imprägnierungsmaterial 15 aufgebracht, und zwar entweder nach oder vor dem Überziehen des Schlauches S. Dann wird mittels einer Vorrichtung 12 - wie durch 13 angedeutet - z.B. Wärme zur Einwirkung gebracht, um das die Beschichtung B bildende Substrat auszuhärten. Während der Aushärtung wird die Spannung und Kontraktion der Schläuche aufrechterhalten. Danach werden die überstehenden Schlauchenden 16, 17 abgetrennt.

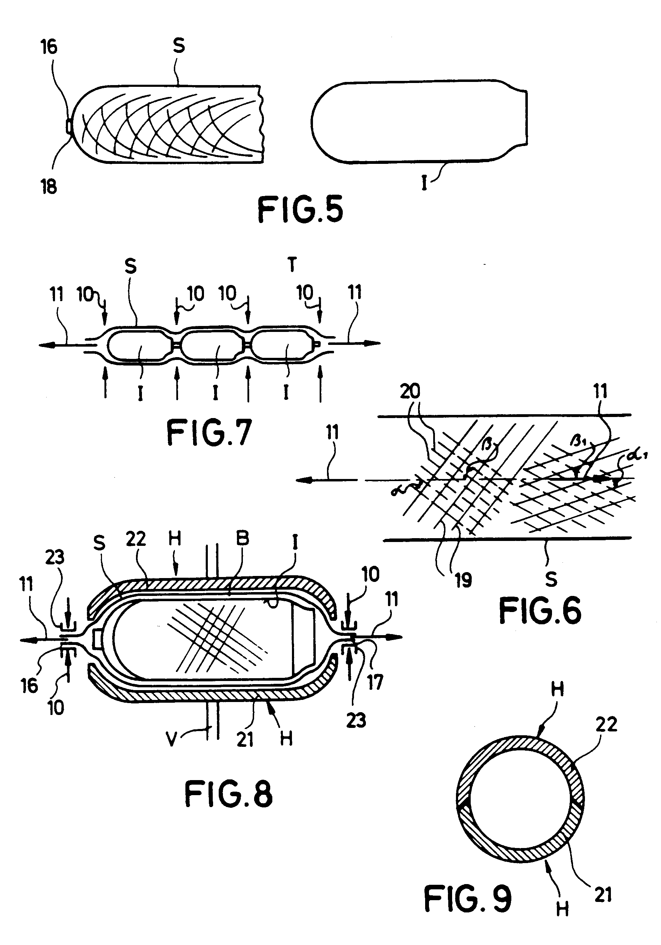

Bei der Verfahrensvariante gemäß Fig. 5 wird ein Schlauchabschnitt S aus Verstärkungsmaterial verwendet, zweckmäßigerweise ein gestrickter oder gewirkter Schlauch, der an seinem Schlauchende 16 - wie bei 18 angedeutet - verschlossen ist und die Form eines Strumpfes hat. Der Strumpf wird über den Innenbehälter I und vom offenen Ende her kontrahiert und gespannt. Das verschlossene Schlauchende 16 legt sich selbsttätig an das andere Behälterende an. Das Verschließen des Schlauchendes 16 kann durch Vernähen, Verkleben oder auch mittels einer kurzfristig angebrachten Klammer erfolgen.

Gemäß Fig. 6 sind durch das Spannen in Richtung des Pfeiles 11 die Fadenwinkel im Schlauch S einstellbar. Nach dem Überziehen verlaufen die Fasern, Filamente, Fäden oder Bändchen im Schlauch mit bezüglich der Längsachse gesehenen Winkeln α und β. Durch das Spannen in Richtung des Pfeiles 11 werden Winkel α1 und β1 eingestellt, die im Hinblick auf die gewünschte Druckverteilung bwz. Druckfestigkeit wünschenswert sind.

Die Beschichtung B kann aus mehreren übereinander und über den Innenbehälter gezogenen Schläuchen oder Schlauchabschnitten aufgebaut sein. Es können auch Schläuche aus unterschiedlichen Verstärkungsmaterialien kombiniert werden.

Fig. 7 verdeutlicht schematisch die gleichzeitige Herstellung mehrerer Druckbehälter, deren Innenbehälter I, gegebenenfalls unter Verwendung von Kupplungsstücken K, zu einem gestreckten Behälterstrang T vereinigt sind. Der Schlauch S wird in einem Zug über den Strang T gezogen und unter Spannen in Längsrichtung (Pfeile 11) bei jeweils benachbarten Behälterenden in Richtung der Pfeile 10 kontrahiert. Unter Aufrechterhaltung der Spannung und Kontraktion härtet die Beschichtung aus.

In Fig. 8 ist ein Teil einer Vorrichtung zum Herstellen der Druckbehälter D gezeigt. Wärme zum Aushärten der Beschichtung B wird mit einer Heizeinrichtung H aufgebracht, die beispielsweise aus zwei Schalen 22 und 21 (s. auch Fig. 9) besteht, die sich an den überzogenen Innenbehälter I andrücken lassen. Aus den Schalen 21, 22 stehen die Schlauchenden 16, 17 vor, an denen Werkzeuge 23 angreifen, mit denen die Längsspannung in Richtung der Pfeile 11 und die Kontraktion in Richtung der Pfeile 10 in den Schlauch S eingebracht wird. Die Schalen 21, 22 sind in einer Halteeinrichtung V beweglich gelagert, die als Widerlager für die Spann- und Kontraktionskräfte fungiert.

Die Vorrichtung, in der die Druckbehälter fertiggestellt werden, enthält zweckmäßigerweise eine Überziehvorrichtung für den Schlauch sowie eine Spann- und Kontrahiervorrichtung und eine Aushärtvorrichtung. Gegebenenfalls ist in die Vorrichtung eine Imprägniervorrichtung integriert. Das Überziehen des Schlauches kann auch außerhalb der Vorrichtung mit anderen Hilfsmittels vorgenommen werden, so daß das Halbfabrikat als Innenbehälter und übergezogenem Schlauch nur mehr in die Vorrichtung einzusetzen ist. Werden mehrere Behälter gleichzeitig hergestellt, so kann der Strang aus den Innenbehältern, gegebenenfalls mit dem darüber gezogenen Schlauch, schon außerhalb der Vorrichtung vorbereitet und nur mehr zum Spannen und Kontrahieren und Aushärten in die Vorrichtung eingebracht werden.

## Patentansprüche

1. Verfahren zum Herstellen eines Druckbehälters (D), insbesondere eines Trocknerbehälters für Fahrzeug-Klimaanlagen, bei dem über einen Innenbehälter (I) wenigstens ein flexibler Schlauch (S) aus sich überkreuzenden Verstärkungsfasern oder -filamenten gezogen, mit härtbarem Imprägnierungsmaterial imprägniert und der imprägnierte Schlauch auf dem Innenbehälter (I) ausgehärtet wird, um eine druckaufnehmende bzw. druckverteilende Beschichtung (B) des Druckbehälters (D) zu bilden, **gekennzeichnet durch** folgende Schritte:
der über den Innenbehälter (I) gezogene Schlauch (S) wird von außen in Längsrichtung gespannt und kontrahiert, und die Spannung und Kontraktion des Schlauches (S) werden bis zum Aushärten der Beschichtung (B) aufrechterhalten.

2. Verfahren nach Anspruch 1, **dadurch gekennzeichnet**, daß die Faser- oder Filament- bzw. Fadenwinkel (α, β, α1, β1) im Schlauch (S) durch das spannen in Längsrichtung und das Kontrahieren in Bezug auf die Längsachse (11) des Innenbenälters (I) eingestellt werden.

3. Verfahren nach Anspruch 1, **dadurch gekennzeichnet,** daß mehrere Innenbehälter (I) hintereinander gesetzt und zu einem Behälterstrang (Z) verbunden werden, und daß der mindestens eine Schlauch (S) aus Verstärkungsfasermaterial über den Behälterstrang (T) gezogen und durch Spannen in Längsrichtung und Kontrahieren an den Behälterenden jedes Innenbehälters (I) im Behälterstrang (T) angelegt wird, und daß die Spannung und Kontraktion bis zum Aushärten der Beschichtung (B) aufrechterhalten werden.

4. Druckbehälter (D), insbesondere Trocknerbehälter für eine Fahrzeugklimaanlage, mit einem Innenbehälter (I) und einer auf dessen Außenseite stoffschlüssig aufgebrachten, mit aushärtbarem Imprägnierungsmaterial imprägnierten und nach dem Aufbringen ausgehärteten Beschichtung (B) aus wenigstens einem aus sich überkreuzenden Fasern oder Filamenten vorgefertigten Schlauch (S) aus Verstärkungsmaterial (8), **dadurch gekennzeich**net, daß die Beschichtung (B) aus dem mit Längsspannung und Kontraktionsspannung an den Innenbehälter (I) und die Behälterenden angelegten und mit aufrecht gehaltenen Spannungen ausgehärteten Schlauch (S) besteht.

5. Druckbehälter nach Anspruch 4, **dadurch gekennzeichnet**, daß der Innenbehälter (I) aus wenigstens einem zylindrischen Standardrohling (1) aus der Massenproduktion von Spraydosen oder Getränkebehältern besteht, und daß die Beschichtung (B) wenigstens ein handelsüblicher gestrickter oder gewirkter Schlauch (S) oder Schlauchabschnitt aus Verstärkungsmaterial (8) ist.

6. Vorrichtung zum Herstellen eines Druckbehälters (D) aus einem vorgefertigten Innenbehälter (I) und einer äußeren, imprägnierten und ausgehärteten Beschichtung (B) aus mindestens einem Schlauch oder Schlauchelement aus Verstärkungsmaterial (8), **gekennzeichnet durch** eine Überziehvorrichtung zum Überziehen des Schlauches (S) über den Innenbehälter (I), durch eine Spann- und Kontrahiervorrichtung (23) für wenigstens ein Schlauchende (16, 17), durch eine Aushärtevorrichtung (H) zum Aushärten des gespannten, kontrahierten und imprägnierten Schlauches (S) auf dem Innenbehälter (I), und durch mindestens zwei an den mit dem Schlauch (S) überzogenen Innenbehälter (I) andrückbare Heizschalen (21, 22) und durch wenigstens eine Spann- und Kontrahiervorrichtung (23) für wenigstens ein aus den angedrückten Heizschalen (21, 22) herausragendes Schlauchende (16, 17).

7. Vorrichtung nach Anspruch 6**, dadurch gekennzeichnet**, daß die Heizschalen (21, 22) in einer Halteeinrichtung (V) für den mit dem Schlauch (S) überzogenen Innenbehälter (I) angeordnet sind, die als Spann- bzw. Kontrahierwiderlager ausgebildet ist.

8. Vorrichtung nach Anspruch 6, **dadurch gekennzeichnet**, daß zum gleichzeitigen Herstellen mehrerer Druckbehälter (D) eine Haltevorrichtung für einen aus mehreren Innenbehältern (I) gebildeten und mit wenigstens einem durchgehenden Schlauch (S) aus Verstärkungsmaterial überzogenen Behälterstrang (T) vorgesehen ist, daß eine Spann- und Konrahiervorrichtung für den Schlauch vorgesehen ist, und daß eine Heizvorrichtung (H), vorzugsweise mit an den Behälterstrang andrückbaren Heizschalen (21, 22), vorgesehen ist.

## Claims

1. Method for the production of a pressure vessel (D), especially of a drier container for motor vehicle air-conditioning units, in which at least one flexible tube (S) consisting of reinforcing fibres or filaments which cross over each other is drawn over an inner vessel (I) and is impregnated with curable impregnation material, and the impregnated tube is cured on the inner vessel (I) in order to form a pressure-absorbing and/or pressure-distributing coating (B) on the pressure vessel (D), characterized by the following stages:
the tube (S) drawn over the inner vessel (I) is tensioned and contracted in the longitudinal direction from outside, and the tension and contraction of the tube (S) are maintained until the coating (B) is cured.

2. Method according to Claim 1, characterized in that the angles of the fibres or filaments and/or threads (α, β, α1, β1) in the tube (S) are set by the tensioning in the longitudinal direction and the contraction relative to the longitudinal axis (11) of the inner vessel (I).

3. Method according to Claim 1, characterized in that a plurality of inner vessels (I) are placed in series and are connected to form a string (T) of vessels, and in that at least one tube (S), consisting of reinforcing fibre material, is drawn over the string (T) of vessels and, by means of tensioning in the longitudinal direction and contraction, is laid against the vessel ends of each inner vessel (I) in the string (T) of vessels, and in that the tensioning and contraction are maintained until the coating (B) has cured.

4. Pressure vessel (D), especially a drier container for a motor vehicle air-conditioning unit, having an inner vessel (I) and a coating (B), consisting of at least one tube (S) of reinforcing material (8) prefabricated from fibres or filaments which cross over each other, which tube is applied to the outside of the pressure vessel (D) by adhesion, is impregnated with curable impregnation material and is cured after application, characterized in that the coating (B) consists of the tube (S) which is laid, with longitudinal tensioning and contractile tensioning, against the inner vessel (I) and the vessel ends and is cured with the tensionings maintained.

5. Pressure vessel according to Claim 4, characterized in that the inner vessel (I) consists of at least one cylindrical standard blank (1) from the mass production of spray-cans or beverage containers, and that the coating (B) is at least one commercially available knitted tube (S) or tube section made from reinforcing material (8).

6. Method for producing a pressure vessel (D) from a prefabricated inner vessel (I) and an outer, impregnated and cured coating (B) made from at least one tube or tube element of reinforcing material (8), characterized by a drawing device for drawing the tube (S) over the inner vessel (I), by a tensioning and contracting device (23) for at least one tube end (16, 17), by a curing device (H) for curing the tensioned, contracted and impregnated tube (S) on the inner vessel (I), and by at least two heating shells (21, 22) which can be pressed onto the inner vessel (I) over which the tube (S) has been drawn, and by at least one tensioning and contracting device (23) for at least one tube end (16, 17) projecting from the pressed-on heating shells (21, 22).

7. Device according to Claim 6, characterized in that the heating shells (21, 22) are arranged in a holding apparatus (V) for the inner vessel (I) over which the tube (S) has been drawn, which holding apparatus (V) is designed as a counter-bearing for tensioning and/or contraction.

8. Device according to Claim 6, characterized in that, for the simultaneous production of a plurality of pressure vessels (D), a holding device is provided for a string (T) of vessels which is formed from a plurality of inner vessels (I) and over which at least one continuous tube (S) of reinforcing material has been drawn, in that a tensioning and contracting device is provided for the tube, and in that a heating device (H), preferably having heating shells (21, 22) which can be pressed onto the string of vessels, is provided.

## Revendications

1. Procédé pour la fabrication d'un récipient à pression (D), en particulier d'un récipient de déshydrateur pour installations de conditionnement d'air pour véhicules, dans lequel au moins un flexible souple (S) de fibres ou filaments de renforcement se croisant est enfilé sur un récipient intérieur (I), imprégné d'une matière d'imprégnation durcissable et le flexible imprégné est durci sur le récipient intérieur (I) pour former un revêtement (B) du récipient à pression (D) absorbant la pression ou répartissant la pression, caractérisé par les étapes suivantes:
le flexible (S) enfilé sur le récipient intérieur (I) est tendu et contracté, de l'extérieur, dans le sens longitudinal et la tension et la contraction du flexible (S) sont maintenues jusqu'au durcissement du revêtement (B).

2. Procédé suivant la revendication 1, caractérisé en ce que les angles de fibres ou filaments ou fils (α, β, α1, β1) dans le flexible (S) sont réglés par la tension dans le sens longitudinal et la contraction par rapport à l'axe longitudinal (11) du récipient intérieur (I).

3. Procédé suivant la revendication 1, caractérisé en ce que plusieurs récipients intérieurs (I) sont placés l'un derrière l'autre et unis en un cordon de récipients (Z) et en ce que l'au moins un flexible (S) en matériau de renforcement est enfilé sur le cordon de récipients (T) et est placé par tension dans le sens longitudinal et contraction sur les extrémités de récipient de chaque récipient intérieur (I) dans le cordon de récipients (T) et en ce que la tension et la contraction sont maintenues jusqu'au durcissement du revêtement (B).

4. Récipient à pression (D), en particulier d'un récipient de déshydrateur pour installations de conditionnement d'air pour véhicules, avec un récipient intérieur (I) et un revêtement (B), imprégné d'une matière d'imprégnation durcissable, appliqué en liaison de matériau sur sa face extérieure et durci après l'application, consistant en au moins un flexible (s) en matériau de renforcement (8) préfabriqué en fibres ou filaments se croisant, caractérisé en ce que le revêtement (B) se compose du flexible (S) placé par tension longitudinale et tension de contraction sur le récipient intérieur (I) et sur les extrémités de récipient et durci à tensions maintenues.

5. Récipient à pression suivant la revendication 4, caractérisé en ce que le récipient intérieur (I) consiste en au moins une pièce brute standard (1) cylindrique de la production en masse de flacons à pulvériser ou de récipients à boissons et en ce que le revêtement (B) est au moins un flexible (S) ou tronçon de flexible en matériau de renforcement tricoté ou tissé disponible dans le commerce.

6. Dispositif pour la fabrication d'un récipient à pression (D) composé d'un récipient intérieur (I) préfabriqué et d'un revêtement (a) imprégné extérieurement et durci consistant en au moins un flexible ou élément de flexible en matériau de renforcement (8), caractérisé par un dispositif d'enfilage pour l'enfilage du flexible (S) sur le récipient intérieur (I), par un dispositif de tension et de contraction (23) d'au moins une extrémité de flexible (16, 17), par un dispositif de durcissement (H) pour le durcissement du flexible (S) tendu, contracté et imprégné sur le récipient intérieur (I) et par au moins deux coquilles chauffantes (21, 22) pouvant être pressées contre le récipient intérieur (I) revêtu du flexible (S) et par au moins un dispositif de tension et de contraction (23) d'au moins une extrémité de flexible (16, 17) ressortant des coquilles chauffantes (21, 22) appliquées.

7. Dispositif suivant la revendication 6, caractérisé en ce que les coquilles chauffantes (21, 22) sont disposées dans un dispositif de support (V) du récipient intérieur (I) revêtu du flexible (S) qui se présente sous forme de butée de tension ou de contraction.

8. Dispositif suivant la revendication 6, caractérisé en ce qu'il est prévu, pour la fabrication simultanée de plusieurs récipients à pression (D), un dispositif de support d'un cordon de récipients (T) formé de plusieurs récipients intérieur (I) et revêtu d'au moins un flexible (S) continu en matériau de renforcement, qu'il est prévu un dispositif de tension et de contraction du flexible et qu'il est prévu un dispositif de chauffage (H), de préférence à coquilles (21, 22) pouvant être pressées contre le cordon de récipients.
